# FASCICULE DE BREVET EUROPEEN

(11) **EP 0 988 594 B1**
(45) Date de publication et mention de la délivrance du brevet: **16.03.2005**
(21) Numéro de dépôt: 98964529.6
(22) Date de dépôt: 28.12.1998
(51) Int. Cl.: G06F 9/46

(54) **PROCEDE D'ASSISTANCE A L'ADMINISTRATION D'UNE APPLICATION DISTRIBUEE BASEE SUR UN FICHIER BINAIRE DE CONFIGURATION DANS UN SYSTEME INFORMATIQUE**
HILFSVERFAHREN IN EINEM INFORMATIKSYSTEM FÜR DIE VERWALTUNG EINER VERTEILTEN ANWENDUNG, DIE SICH AUF EINE BINÄREN KONFIGURATIONSDATEI BEZIEHT.
METHOD FOR ASSISTING THE ADMINISTRATION OF A DISTRIBUTED APPLICATION BASED ON A BINARY CONFIGURATION FILE IN A COMPUTER SYSTEM

(30) Priorité: 30.12.1997 FR 9716699
(43) Date de publication de la demande: 29.03.2000
(73) Titulaire: BULL S.A., 78434 Louveciennes Cedex (FR)
(72) Inventeur: BAILLIF, Christian, F-92340 Bourg la Reine (FR); DIA, Mama, Saidou, F-92290 Chatenay Malabry (FR)
(86) Numéro de dépôt international: PCT/FR1998/002886
(87) Numéro de publication internationale: WO 1999/035573

(56) Documents cités:
- US-A- 5 557 735
- BERNSTEIN P A: "TRANSACTION PROCESSING MONITORS" COMMUNICATIONS OF THE ASSOCIATION FOR COMPUTING MACHINERY, vol. 33, no. 11, 1 novembre 1990, pages 75-86, XP000110643
- GUPTA P: "HP ENCINA/7000: MIDDLEWARE FOR CONSTRUCTING TRANSACTION PROCESSING APPLICATIONS" HEWLETT-PACKARD JOURNAL, vol. 46, no. 6, 1 décembre 1995, pages 61-74, XP000581127

## Description

La présente invention concerne un procédé d'assistance à l'administration d'une application distribuée basée sur un fichier binaire de configuration dans un système informatique. Ce procédé d'assistance à l'administration peut notamment être appliqué à un gestionnaire de traitement des transactions tel que celui commercialisé sous la marque "Tuxedo".

L'application "Tuxedo" permet à différents logiciels qui ne se connaissent pas mais qui respectent un certain protocole, de travailler ensemble.

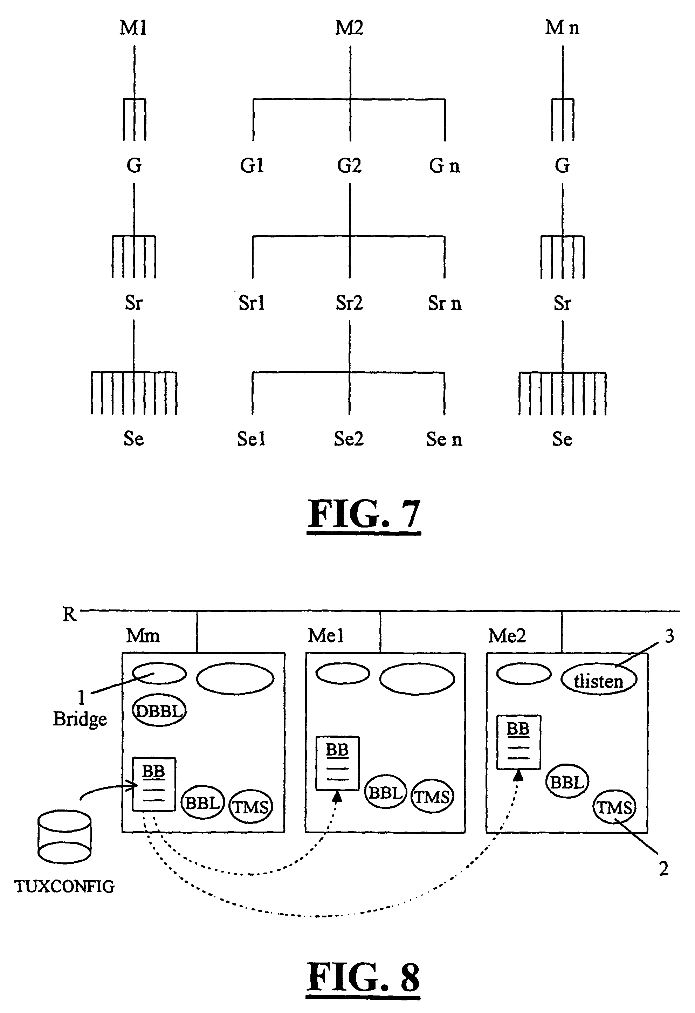

Généralement, l'application "Tuxedo" est une application distribuée c'est-à-dire une application qui s'exécute sur plusieurs machines en même temps. On appelle "machine", le noeud du réseau au niveau duquel les serveurs de l'application "Tuxedo" s'exécutent, et "machine maître" celle contrôlant l'application ''Tuxedo''. La figure 8 illustre le fonctionnement de l'application ''Tuxedo''. Lorsque l'application "Tuxedo" est lancée, le fichier binaire de configuration (TUXCONFIG) est chargé du disque dans le tableau bulletin (Bulletin Board, BB) de la machine maître (Mm). Le tableau bulletin (BB) représente un ensemble de structures de données situées dans la mémoire partagée et contenant des informations sur les transactions, les serveurs, les services et les clients appartenant à l'application ''Tuxedo''. Lors du lancement de la machine maître (Mm), le tableau bulletin (BB) est chargé dans la mémoire de la machine maître (Mm) à partir du fichier binaire de configuration ''Tuxedo'' (TUXCONFIG). Puis, il est diffusé vers les machines esclaves (Me) par le processus maître de l'application appelé liaison distinguée du tableau bulletin DBBL (Distinguished Bulletin Board Liaison). Chaque machine de l'application est sous le contrôle d'un processus appelé liaison du tableau bulletin BBL (Bulletin Bord Liaison). La liaison distinguée du tableau bulletin DBBL est un processus administratif qui communique avec les processus (BBL), pour coordonner les mises à jour du tableau bulletin (BB). La liaison du tableau bulletin BBL est un processus administratif chargé de tenir à jour une copie du tableau bulletin (BB) sur sa propre machine (Me). Chaque machine (Me) est sous le contrôle d'un processus appelé BBL, défini implicitement par "Tuxedo". Le pont (BRIDGE) (1) est un processus de gestion des communications entre les serveurs de l'application ''Tuxedo''. Chaque machine est dotée d'un pont défini implicitement par ''Tuxedo''. Le serveur TMS (Transaction Manager Server) est un processus qui gère un protocole de validation et la reprise pour les transactions exécutées par plusieurs serveurs applicatifs. Le module d'écoute (tlisten, 3) est un processus qui gère les messages destinés à l'application "Tuxedo" sur une machine donnée, avant que le processus pont (BRIDGE) de cette machine n'ait été lancé. Un module d'écoute permet à une machine de recevoir des informations provenant d'autres machines. Un module d'écoute est obligatoire sur chaque machine lorsque l'application est distribuée.

L'application "Tuxedo" est créée par la constitution d'un fichier binaire de configuration qui définit l'architecture de ladite application (figure 7). Lors de la création du fichier de configuration, un administrateur définit les services (Se) fournis par l'application et les assigne à des serveurs (Sr) d'application. L'administrateur définit ensuite des groupes (G) et assigne un ensemble de serveurs (Sr). Enfin, l'administrateur assigne des groupes (G) à une machine (M). Chaque application doit être dotée au minimum d'un groupe (G), d'un service (Se) et d'un serveur (Sr). Une machine (M) peut gérer plusieurs groupes (G).

Après la création d'une application "Tuxedo", celle-ci doit être administrée. L'objet de l'invention est de créer un système d'assistance à l'administration de l'application ''Tuxedo''. Les principales étapes concernant l'administration d'une application "Tuxedo" consistent en :
- une étape de chargement du fichier binaire de configuration de l'application "Tuxedo" ;
- une étape de lancement des modules d'écoute lorsque l'application "Tuxedo" est une application distribuée ;
- une étape de lancement de l'application Tuxedo ;
- une étape de contrôle de l'application. Celle-ci consiste à afficher des informations et à procéder, s'il y a lieu aux corrections requises ;
- une étape d'arrêt de l'application; et éventuellement
- une étape d'arrêt des modules d'écoute lorsque ceux-ci ont été lancés.

L'administration d'une application distribuée peut rapidement devenir très complexe. En effet, avant que cette administration puisse démarrer, l'opérateur doit activer un module d'écoute sur chaque machine esclave sur laquelle il veut agir. Pour cela, l'administrateur doit tout d'abord consulter un fichier contenant des informations sur l'activation des modules d'écoute. Ce fichier est généralement stocké, à une place dont il faut se souvenir, sur chaque machine. Puis à l'aide de ces informations, l'opérateur doit activer tour à tour le module d'écoute de chaque machine. Ainsi, si l'application concerne dix machines, l'opérateur doit activer le module d'écoute sur les dix machines, puis à la fin de l'application, désactiver les dix modules d'écoute. Cette opération répétitive est longue et fastidieuse.

Pour effectuer ces tâches, chaque administrateur a sa solution. La solution la plus courante est de stocker sur chaque machine, a une place dont il faut se souvenir des scripts d'activation des modules d'écoute et d'avoir une copie papier du fichier de configuration. L'administrateur doit veiller à ce que les informations soient à jour à tout moment. A chaque fois que la configuration change, il ne doit pas oublier d'imprimer une copie papier du fichier de configuration et de mettre à jour les scripts sur les machines esclaves.

D'autre part, à chaque fois que l'opérateur veut agir sur un élément d'une application, il doit pouvoir identifier rapidement et de façon sûre une ressource donnée comme par exemple, l'arrêt du serveur "serv1" appartenant au groupe "group1" sur la machine "mach1".

Lorsque le nombre d'applications augmente, ces opérations manuelles sont source de nombreuses erreurs.

Il est connu dans l'art antérieur, par le document Bernstein P A : « Transaction Processing Monitors » Communicatons of the Association for Computing Machinery, vol. 33, n°11, 1 novembre 1990, pages 75-86, une automatisation des étapes susmentionnées. La méthode enseignée dans ce document nécessite la maintenance dans le système d'une description de la configuration des processus. Il est également connu par le document US 5 557 735 un système de communication stockant une information de configuration d'un contrôleur, permettant de mettre à jour un équipement de communication de données. L'information de configuration peut en effet être facilement récupérée en cas de remplacement du contrôleur par un autre. Ces méthodes ne sont en fait pas particulièrement adaptées pour des applications distribuées dont la configuration évolue fréquemment, car il faut alors mettre à jour une description de la configuration des processus. Il existe donc un besoin pour une méthode d'assistance automatisée plus évolutive.

La présente invention a pour but de remédier aux inconvénients de l'art antérieur en proposant un procédé d'assistance à l'administration d'une application distribuée d'un gestionnaire de traitement des transactions, basée sur le fichier binaire de configuration de l'application comportant avantageusement :
- une étape de décompilation du fichier de configuration actif de la machine maître par un module autonome de décompilation,
- une étape de récupération d'informations dans le fichier de configuration décompilé de la machine maître (Mm),
- une étape de vérification de la consistance de ladite application mise en oeuvre sur une machine donnée,
- une étape de gestion d'au moins un module d'écoute (3) d'une machine esclave de l'application à partir d'une autre machine, ledit module d'écoute étant lancé sur la machine de façon assistée par utilisation des informations prélevées lors de l'étape de récupération.

Selon une autre particularité, les informations concernant ladite application distribuée sont directement prélevées dans le fichier de configuration actif de la machine maître.

Selon une autre particularité, l'étape de vérification de consistance de ladite application consiste en une comparaison entre des informations issues du fichier de configuration de la machine maître et des informations issues de ladite application courante mise en oeuvre sur une machine donnée.

Selon une autre particularité, ladite gestion des modules d'écoute permet de lancer et d'arrêter au moins un module d'écoute, d'afficher des informations concernant au moins un module d'écoute, de modifier le journal d'au moins un module d'écoute, de vérifier le script d'au moins un module d'écoute et de mettre à jour le script d'au moins un module d'écoute.

Selon une autre particularité, un administrateur se trouvant sur une machine quelconque du réseau peut lancer ou arrêter un module d'écoute mis en oeuvre sur une autre machine du réseau.

Selon une autre particularité, ledit procédé permet d'activer plusieurs modules d'écoute en une seule opération.

Selon une autre particularité, une interface graphique facilite la gestion des modules d'écoute.

Selon une autre particularité, ladite interface graphique permet de visualiser la structure de ladite application et de sélectionner une valeur voulue dans une liste de valeurs de la configuration courante.

Selon une autre particularité, lorsque le fichier contenant des informations sur ladite application mise en oeuvre sur une machine donnée (tlog) est inexistant, le procédé le génère automatiquement pour pouvoir l'utiliser lors du prochain lancement des modules d'écoute (3).

Selon une autre particularité, lesdites informations affichées concernant au moins un module d'écoute comprennent au moins le nom de ladite application, le nom logique de la machine (LMID) sur laquelle ladite application est exécutée, l'identification de l'administrateur (UID) de ladite application, l'adresse utilisé par le module d'écoute (NLSADRR), le chemin d'accès au réseau de ladite application, le chemin d'accès au fichier journal dudit module d'écoute (LLFPN).

D'autres particularités et avantages de la présente invention apparaîtront plus clairement à la lecture de la description ci-après faite en référence aux dessins annexés dans lesquels :
- la figure 1 représente une fenêtre de l'interface graphique proposant l'accès aux commandes principales de gestion des modules ;
- la figure 2 représente une fenêtre de l'interface graphique selon la figure 1 permettant d'activer un ou plusieurs modules d'écoute ;
- la figure 3 représente une fenêtre de l'interface graphique selon la figure 1 permettant l'arrêt d'un ou de plusieurs modules d'écoute ;
- la figure 4 représente une fenêtre de l'interface graphique selon la revendication 1 permettant l'affichage d'informations concernant un module d'écoute d'une application donnée ;
- la figure 5 représente une fenêtre de l'interface graphique selon la revendication 1 qui permet de vérifier le script d'un module d'écoute d'une application donnée ;
- la figure 6 représente une fenêtre de l'interface graphique selon la revendication 1 qui permet de mettre à jour le script d'un module d'écoute sur une machine donnée d'une application donnée ;
- la figure 7 représente la structure générale d'une application distribuée d'un gestionnaire de traitement des transactions ;
- la figure 8 représente un exemple d'application d'un gestionnaire de traitement des transactions.

Suit un exemple non limitatif de spécification de fichier de configuration. Ce fichier de configuration, présenté en annexe 1, concerne l'application ''Tuxedo''. Il est divisé en sept sections (ressources, machines, groupe, serveur, service, réseau).

La section ressource contient des informations générales concernant l'application. Ces informations sont communes à toutes les machines et sont constituées par les paramètres suivants :
- IPCKEY qui représente une clé numérique identifiant le segment de mémoire partagée dans lequel sont stockées les structures d'application. Grâce à cette clé numérique, une application donnée ne peut pas être en conflit avec d'autres applications ;
- MASTER qui représente la machine maître ;
- DOMAINID qui représente le domaine de l'application ;
- MAXACCESSERS qui définit le nombre maximum de personnes pouvant accéder à l'application ;
- MAXSERVERS qui définit le nombre maximum de serveurs pouvant être rattaché à l'application ;
- MAXSERVICES qui définit le nombre maximum de services pouvant être rattaché à l'application ;
- OPTIONS qui permet de préciser si l'application a lieu sur un réseau local ;
- MODEL qui permet de préciser si l'application est distribuée ou si elle ne l'est pas.

La section machines contient des informations sur chaque machine (puce, trifide, zig, orage) du réseau. Ces informations sont constituées par les paramètres suivants :
- LMID (Logital Machine ID) qui définit le nom logique de la machine c'est-à-dire le nom utilisé en interne par l'application, à la place du nom réseau;
- TUXDIR qui spécifie le chemin d'accès au répertoire d'installation du logiciel "Tuxedo" ;
- APPDIR qui spécifie le chemin d'accès aux serveurs applicatifs, c'est-à-dire le chemin menant aux programmes de l'application (par exemple les programmes concernant l'application "TUXEDO") ;
- TUXCONFIG qui spécifie le chemin d'accès absolu au fichier binaire de configuration TUXCONFIG, celui-ci contenant des informations sur l'application ;
- ENVFILE qui spécifie le chemin d'accès au fichier contenant les variables d'environnement pour les serveurs et pour les clients d'une machine donnée;
- ULOGPFX qui spécifie le chemin d'accès au fichier "ULOG" qui contient des informations sur l'historique de l'application.

La section groupe est la section dans laquelle chaque machine est attribuée à un groupe. Dans l'exemple de l'annexe 1, il existe quatre groupes. Un groupe est un ensemble de serveurs assurant des services connexes. Dans le cas le plus simple, un groupe n'est constitué que d'un seul serveur. Tous les serveurs d'un groupe doivent s'exécuter sur la même machine. Une application doit comporter au moins un groupe.

La section serveur fournit des renseignements sur chaque serveur. Un serveur est un module fournisseur de services. Dans l'exemple à l'annexe 1, il existe quatre serveurs. Dans le. cas le plus simple, un serveur assure un seul service. Une application doit être dotée d'au moins un serveur. La section serveur fournit les renseignements suivants :
- SRVGRP qui définit le groupe auquel le serveur est affilié ;
- SRVID qui définit le numéro d'identification du serveur ;
- MIN, MAX qui précisent le nombre maximum et minimum d'occurrences de ce serveur,
- RQADDR qui définit le nom de la queue de message utilisée pour l'envoi d'un message ;
- dans REPLYQ l'administrateur décide de l'existence d'une queue de réponse ;
- CLOPT qui indique les options de démarrage du serveur (services disponibles priorité, ....).

Dans la section service, l'administrateur peut spécifier les services. Un service est un ensemble de fonctions répondant à des requêtes de services émanant d'utilisateurs finaux de l'application. Si l'administrateur désire indiquer des valeurs facultatives différentes des valeurs par défaut, les services doivent obligatoirement être définis.

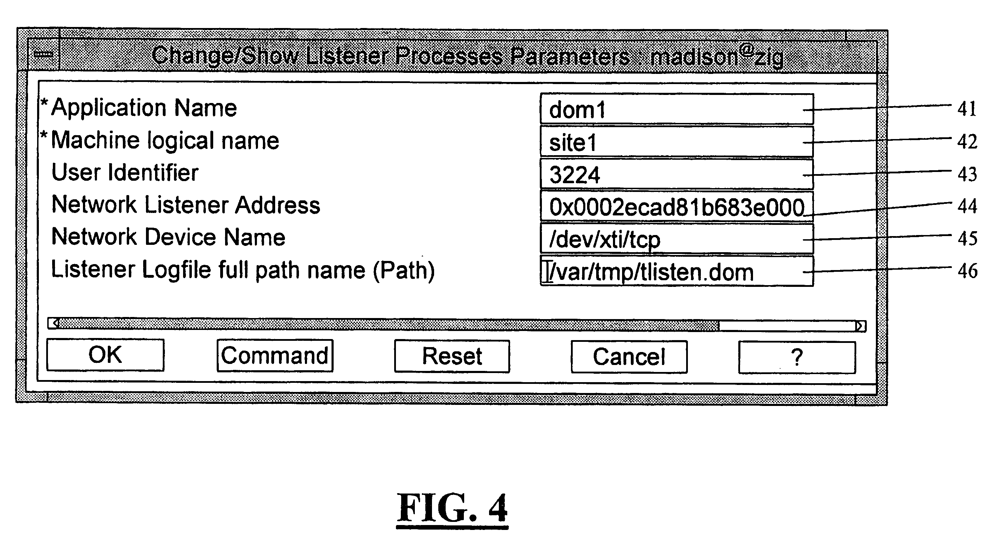

La section réseau (network) contient pour chaque machine :
- l'adresse complète utilisée par le processus pont (BRIDGE) appelée "Network Address" ou "NADDR". Les quatre premiers chiffres (0002 dans l'exemple de la figure 4) représentent le protocole de communication utilisé ("tcp" dans l'exemple ci-dessus). Les quatre chiffres suivants représentent le numéro de port utilisé par le processus et les chiffres suivants représentent l'adresse réseau de la machine ;
- le chemin d'accès au pont (BRIDGE) de la machine. Le pont est un processus de gestion des communications entre les serveurs de l'application. Il sert à amorcer l'application. Chaque machine est dotée d'un pont.
- l'adresse complète du module d'écoute appelée "NLSADDR". Les quatre premiers chiffres représentent le protocole de communication utilisé. Les quatre chiffres suivants représentent le numéro de port utilisé par le module d'écoute qui doit être différent de celui utilisé par le processus pont (BRIDGE). Les chiffres suivants représentent l'adresse réseau de la machine.

La particularité de l'invention est que les informations concernant l'application sont directement prélevées dans le fichier actif de la machine maître. Un administrateur se trouvant sur une machine quelconque du réseau peut gérer l'exécution de la commande "get_tuxval" sur la machine maître pour le compte de l'administrateur comme représenté en page 27 de l'annexe 2.

La sous routine "get_tuxconfig" du programme utilisé dans la mise en oeuvre du procédé d'assistance à l'administration d'une application distribuée, recherche sur le disque dur de la machine maître le fichier actif de configuration de l'application. Celui-ci est ensuite décompilé au moyen de la commande "tmunloadcf".

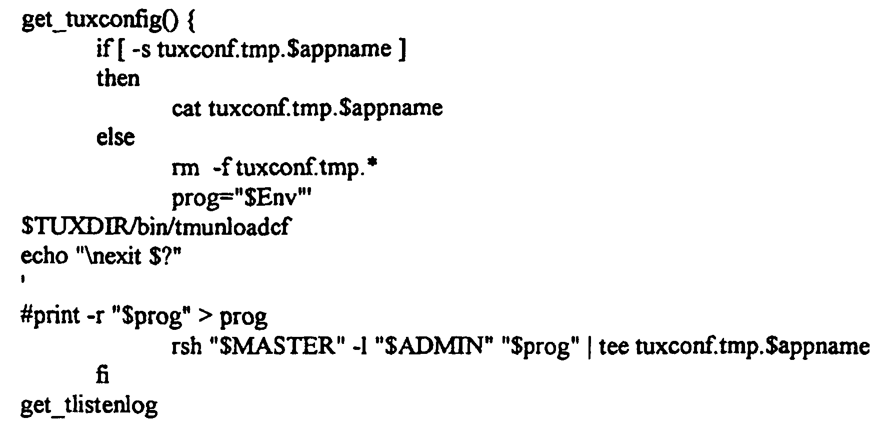

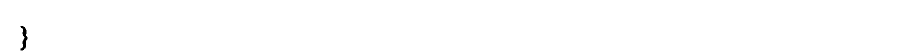

La sous routine "get_tuxval" de ce programme prélève les paramètres tels que LMID, APPDIR, TUXCONFIG, TUXDIR, ROOTDIR, ULOGPFX, NLSADDR, UID et BRIDGE du fichier binaire de configuration de l'application obtenue à l'aide de la sous routine "get_tuxconfig".

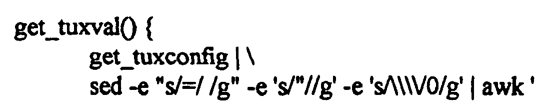

Les valeurs des paramètres recherchées sont tout d'abord initialisées. Pour cela des matrices associatives appelées "tuxconfig_section" sont créées.

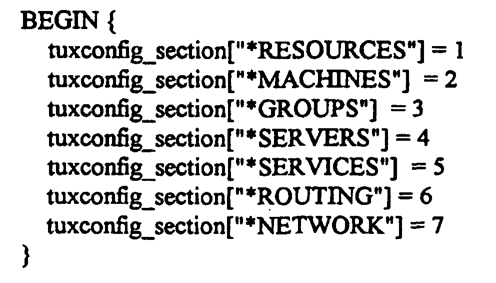

Un index est associé à chaque matrice. Les paramètres recherchés sont situés dans différentes sections du fichier de configuration. Par exemple pour l'application "Tuxedo", ces différentes sections, au nombre de sept, sont appelées "Ressources", "Machines", "Groupes", "Serveurs", "Services" et "Réseau". Pour pouvoir prélever les paramètres dont l'ordinateur a besoin, il doit pouvoir repérer l'endroit où il se trouve dans le fichier de configuration. Dans ce programme, lorsque le nombre de champ (NF) est égal à 1, l'ordinateur se trouve au début d'une section.

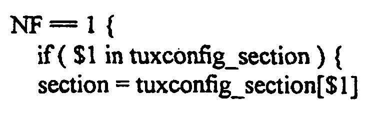

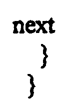

Si l'ordinateur est dans la section 2 et que le deuxième mot est LMID, l'ordinateur prélève le nom logique de la machine (LMID) sur laquelle l'administrateur se trouve.

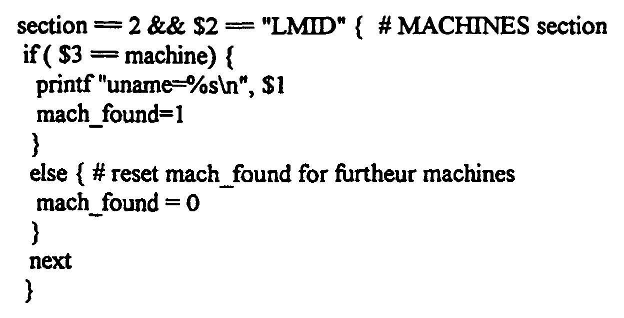

Si l'ordinateur est dans la section 2 et que le premier mot est APPDIR, il prélève le chemin d'accès au répertoire sous lequel les serveurs sont amorcés.

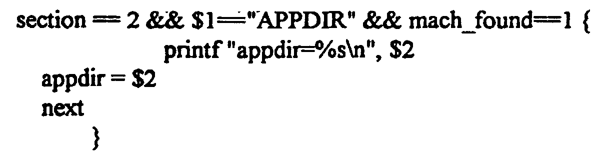

En procédant de la même manière, l'ordinateur va relever successivement dans la section machine du fichier de configuration le chemin d'accès absolu au fichier binaire de configuration (TUXCONFIG), le chemin d'accès au répertoire d'installation du logiciel Tuxedo (TUXDIR ou ROOTDIR), des informations sur l'historique de l'application (ULOGPFX) et dans la section réseau l'adresse du pont de la machine (NLSADDR).

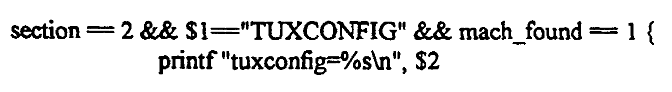

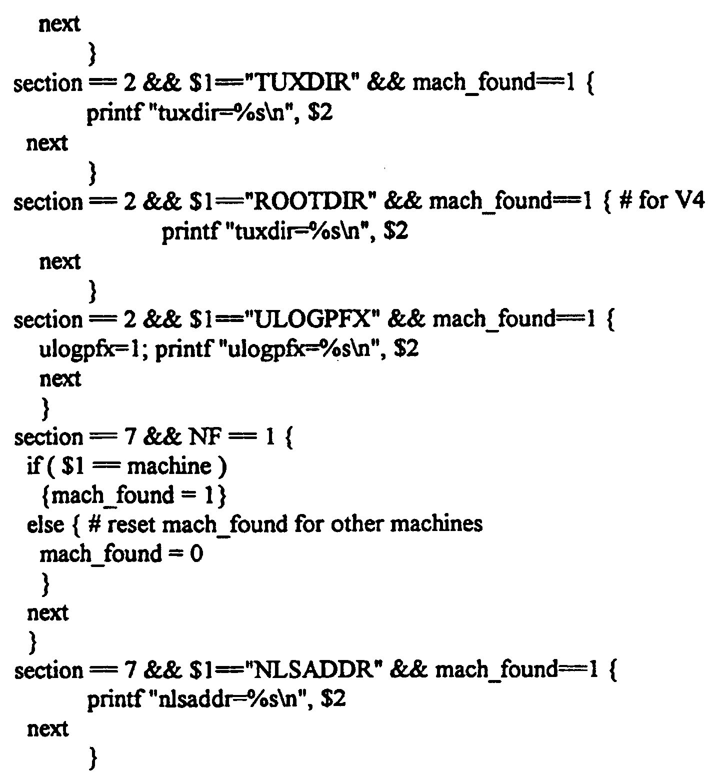

Le programme exécute une boucle sur cette sous routine pour chaque machine jusqu'à ce que l'ordinateur trouve la machine courante. Puis, l'ordinateur se procure dans la section ressources du fichier de configuration l'identification de l'utilisateur de l'application (UID).

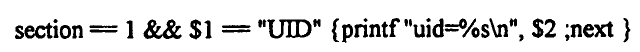

Si aucune valeur n'a été définie pour l'UID dans le fichier de configuration, c'est l'UID de la personne qui a construit l'application qui sera utilisé. Puis, l'ordinateur relève dans la section réseau du fichier de configuration le chemin d'accès au pont (BRIDGE) de la machine.

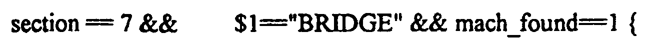

Le paramètre ULOGPFX représentant l'historique de la machine est une valeur optionnelle. Lorsqu'il est inexistant, l'ordinateur va générer un fichier appelé "ULOG" dans le répertoire APPDIR contenant des informations sur les manipulations opérées sur l'application.

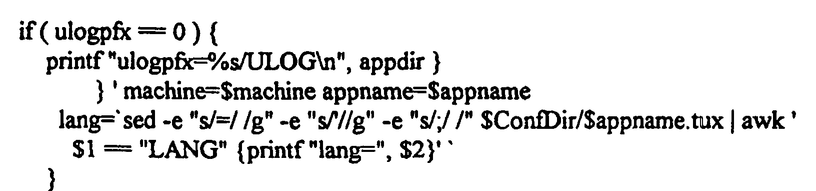

De plus, l'ordinateur a besoin de la langue de travail de l'application représentée par le paramètre LANG, ainsi que de la valeur "tlog". Le paramètre LANG se trouve dans le fichier de configuration de l'utilisateur.

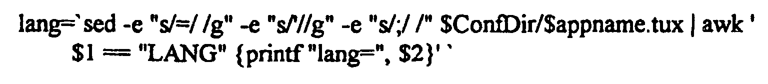

La valeur "tlog" fait référence au fichier "tlistenlog . <nom de l'application> . <nom de la machine>" contenant le nom du fichier historique du module d'écoute.

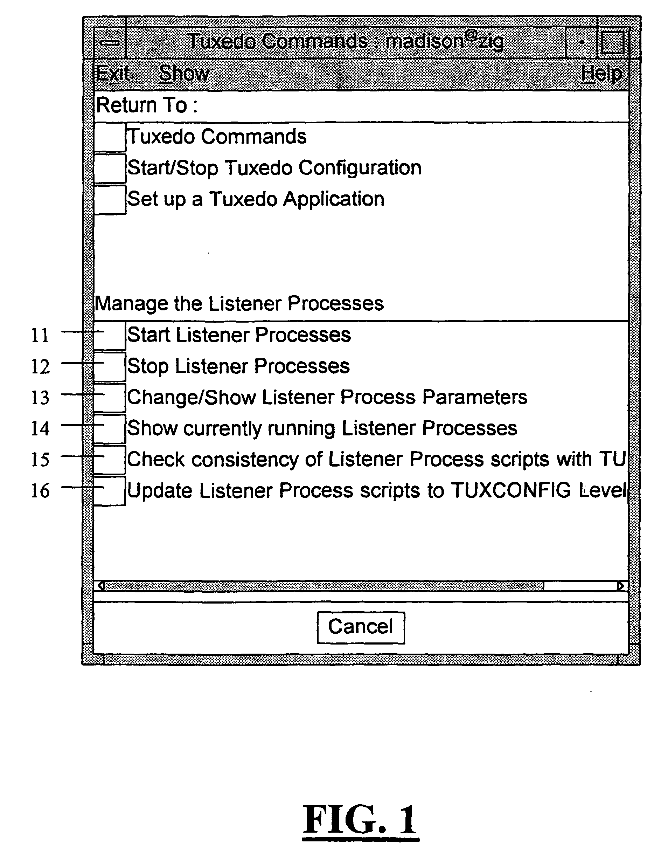

Dans la sous routine get_tuxval, le programme a rassemblé toutes les variables d'environnement dont il a besoin pour pouvoir lancer le procédé d'assistance à l'administration d'une application distribuée. Ce procédé permet, en outre d'amorcer et d'arrêter un ou plusieurs modules d'écoute, d'afficher des informations sur un ou plusieurs modules d'écoute, de modifier le journal d'un ou plusieurs modules d'écoute, de vérifier le script d'un ou plusieurs modules d'écoute et enfin de mettre à jour le script d'un ou plusieurs modules d'écoute (Figure 1).

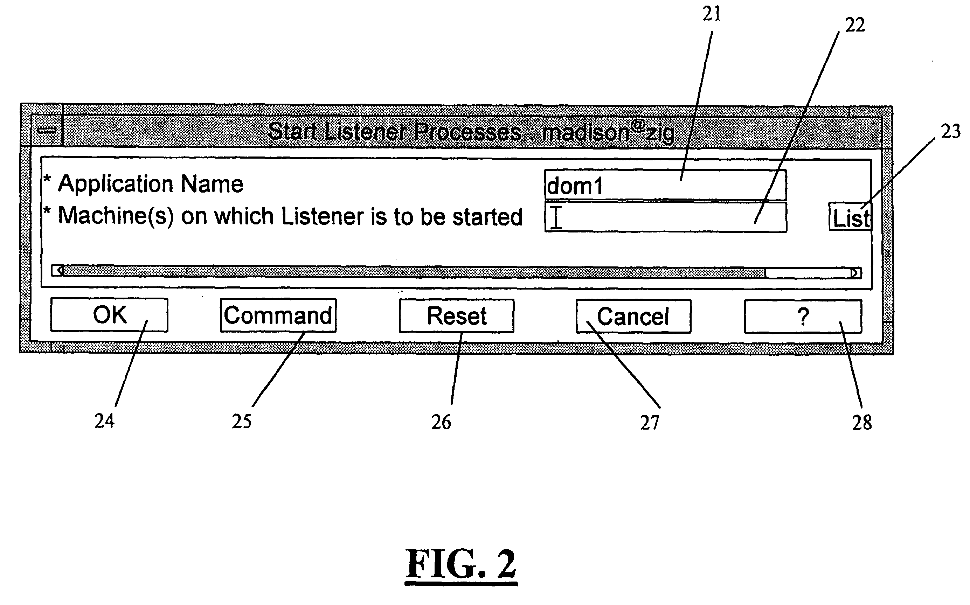

Le procédé d'assistance à l'administration d'une application ''Tuxedo'' distribuée est doté d'une interface graphique qui permet l'accès aux commandes du gestionnaire de traitement des transactions. Pour exécuter une tâche, l'administrateur n'est pas tenu d'entrer des commandes, il lui suffit de cliquer sur des icônes, d'appeler des menus et de spécifier des valeurs via des boîtes de dialogue. Le procédé d'assistance est piloté par menus, structurés sous forme d'arborescence. La sélection d'une option dans le menu principal entraîne l'affichage du menu de niveau inférieur associé. Ce processus est répété jusqu'à l'affichage d'une boite de dialogue déroulante dans laquelle l'administrateur doit entrer des valeurs de paramètre. Afin de pouvoir gérer les modules d'écoute de l'application ''Tuxedo'' distribuée, l'administrateur sélectionne à partir du menu principal de "Tuxedo Commands", les fonctions "Tuxedo Commands", "Start/Stop Tuxedo Configuration", "Set up a Tuxedo Application" et "Manage the Listener Processes". Les fonctions sélectionnables "Strart Listener Processes ", "Stop Listener Processes", "Change/Schow Listener Process Parameters", "Schow currently running Listener Processes", "Check consistency of Listener Process scripts with TUXCONFIG Level" et "Update Listener Process to TUXCONFIG Level" apparaissent sur la fenêtre de l'interface graphique (Figure 1). Pour lancer des modules d'écoute, l'administrateur doit sélectionner la commande "Start Listener Processes" en positionnant le curseur de sa souris sur le pavé (11) et en appuyant sur le bouton gauche de sa souris. La fenêtre de la figure 2 apparaît après la sélection. Si une application a été préalablement désignée, son nom est affiché sur le pavé (21). Sinon, l'administrateur est informé par la marque clignotante du curseur qu'il doit en donner une. Pour cela, l'administrateur peut soit cliquer sur le bouton "List" (22) pour afficher la liste des applications enregistrées et en sélectionner une, soit entrer explicitement le nom de l'application désirée. Puis l'administrateur est informé par la marque clignotante du curseur dans le pavé (23), à partir de laquelle il doit préciser le nom des machines sur lesquelles un module d'écoute doit être lancé. De la même façon, la liste des machines comprises dans ladite application peut être obtenue en cliquant sur le bouton "List" (22). Pour valider les machines sélectionnées, par exemple par surbrillance, l'administrateur doit cliquer sur le bouton "OK" (24). La commande de démarrage du module d'écoute est obtenue par la sélection du bouton "Command" (25). Le bouton "Reset" (26) permet de réinitialiser les valeurs des pavés (21) et (23). Le bouton "Cancel" (27) permet d'annuler une valeur introduite sur les pavés (21) et (23). Le bouton "?" (28) offre une aide en ligne à l'administrateur.

Pour chaque machine désignée dans la liste des machines, l'ordinateur se procure des informations sur l'application dans le fichier de configuration de la machine maître et un fichier historique appelé fichier "tlistenlog . <nom de l'application> . <nom de la machine>" contenant des informations sur l'application agissant actuellement sur cette machine. L'ordinateur vérifie d'abord si le module d'écoute n'est pas déjà démarré sur la machine. Si c'est le cas, le message "Listener already running on <nom de la machine>" est imprimé sur l'écran. Sinon, si un fichier local existe, l'ordinateur l'exécute et imprime le message "Listener started on the machine", si la commande réussit. Si la commande échoue, l'ordinateur imprime le message "Listener starting failed on <nom de la machine>". Si le fichier local n'existe pas, l'ordinateur génère un fichier "tlistenlog . <nom de l'application> . <nom de la machine>" dans le répertoire APPDIR, l'exécute et rend compte du résultat comme précédemment Ce fichier contient des informations sur l'application courante et sera utilisé dans le prochain lancement des modules d'écoute.

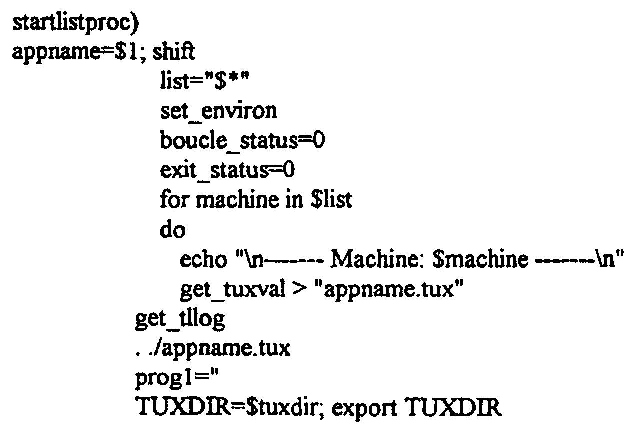

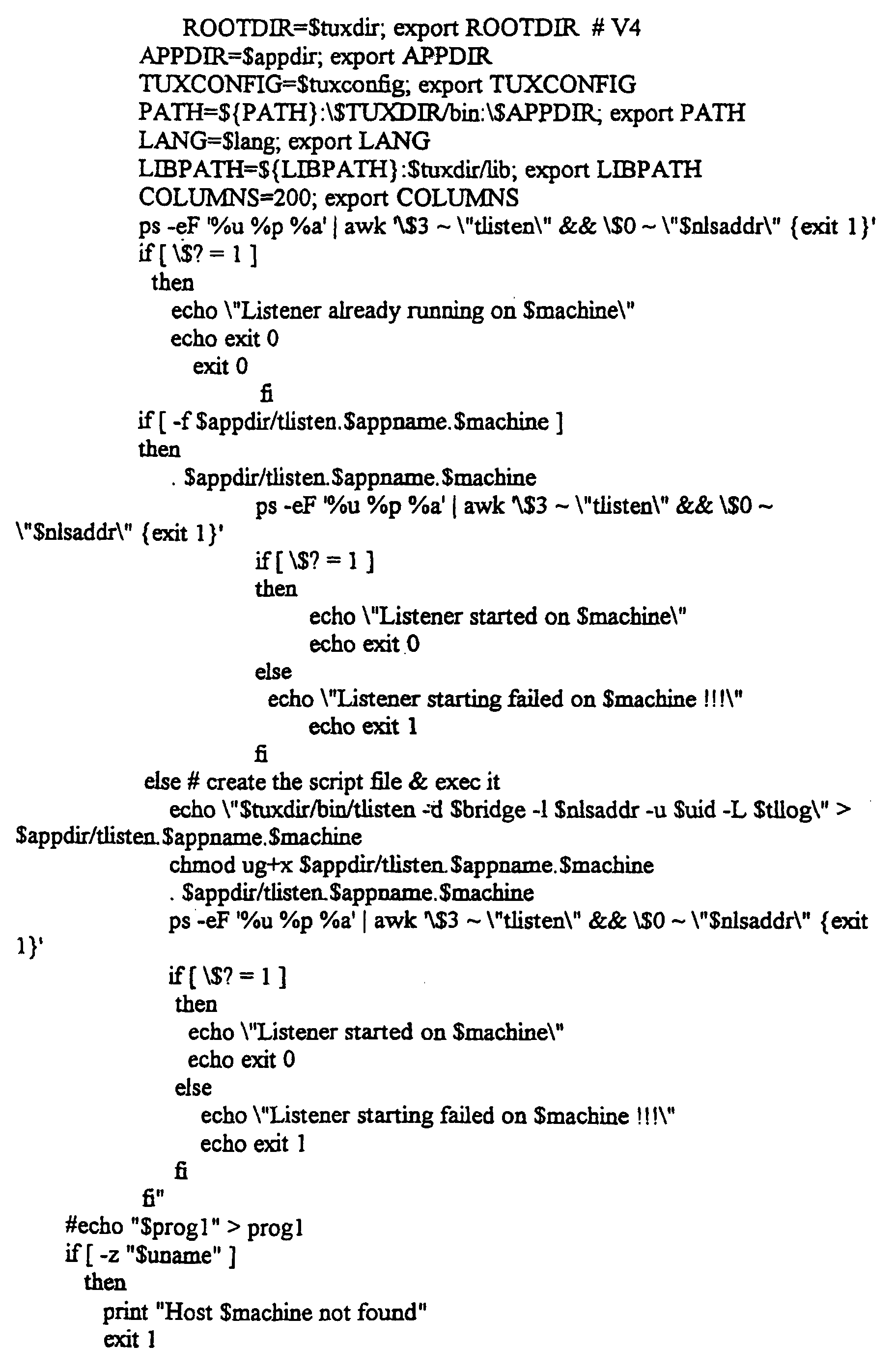

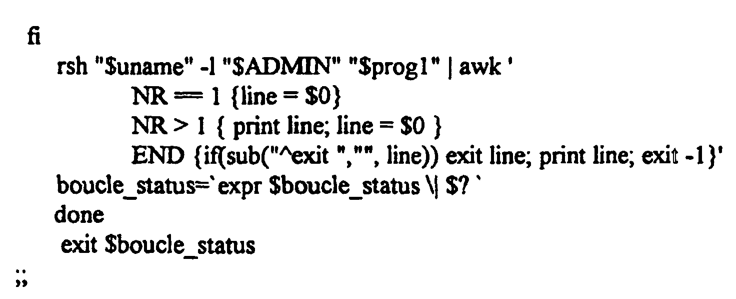

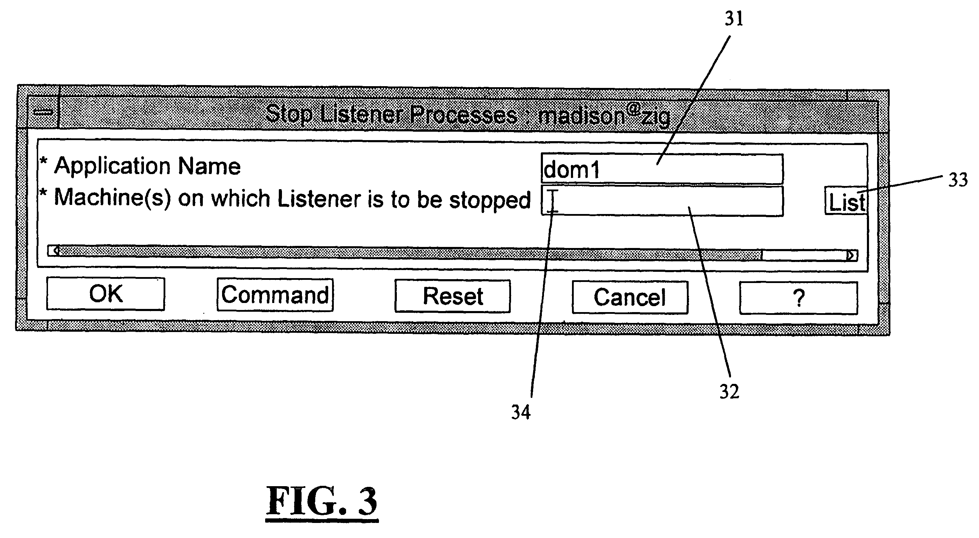

Pour arrêter un module d'écoute, l'administrateur sélectionne à partir du menu principal de gestion des modules d'écoute "Manage the Listener Processes", la fonction "Stop Listener Processes" en positionnant son curseur sur la pavé (12) (Figure 1). La fenêtre de la figure 3 apparaît. Elle permet d'indiquer dans un premier pavé (31), le nom de l'application, dans un second pavé (32), le nom de la ou des machines. En cliquant sur le bouton "List" (33), une liste des applications enregistrées ou une liste des machines concernant chaque application peut être obtenue selon la position de la marque de position clignotante (34). Pour chaque machine de l'application, l'ordinateur imprime le nom de la machine pour laquelle le module d'écoute est arrêté. Cette sélection à l'écran grâce à l'interface graphique lance les pas de programmes "stoplistproc" au cours desquels le programme procure à la station sur laquelle la procédure d'arrêt est lancée, des informations par get_tuxval sur l'application, contenue dans le fichier de configuration de la machine maître.

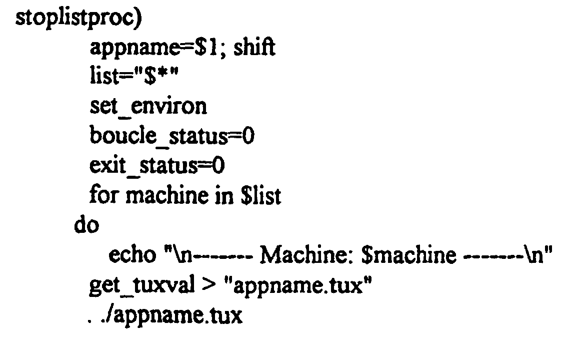

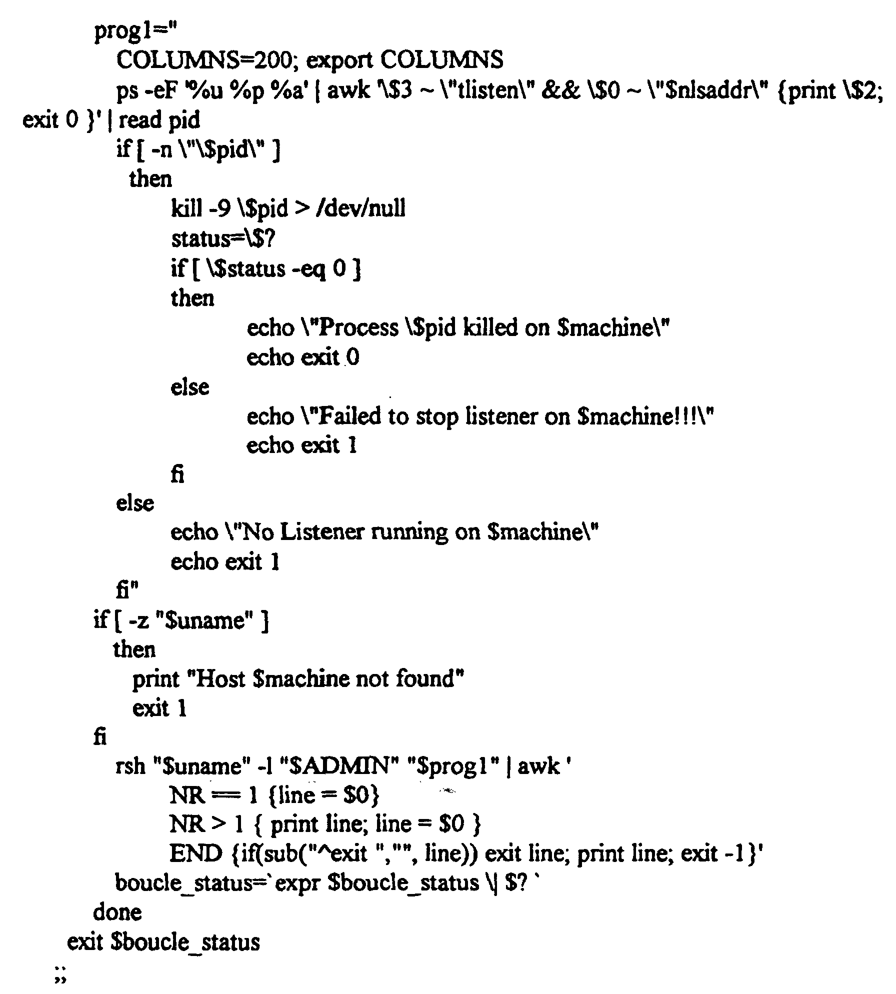

Si un processus appelé "tlisten" appartenant à l'application courante est en fonctionnement sur cette machine, l'ordinateur l'arrête (kill) et imprime le message "Process <l'identification du process (PID, Process IDentifier)> killed on <nom de la machine>", sinon il imprime le message "Failed to stop listener on <nom de la machine>".

De plus, ce procédé d'assistance à l'administration d'une application permet d'afficher des informations concernant un module d'écoute. Pour cela à partir du menu principal de gestion des modules d'écoute "Manage the Listener Processes", il suffit à l'administrateur de sélectionner la fonction "Change/Show Listener Processes Parameters" sur le pavé (13) de la fenêtre présentée en Figure 1. La fenêtre de la figure 4 apparaît. L'administrateur doit préciser dans le pavé (41), le nom de l'application et dans le pavé (42), un nom de machine. Suite à cette précision, les autres pavés (43 à 46) de la fenêtre font apparaître les valeurs des paramètres tels que :
- l'identification de l'administrateur (UID),
- l'adresse complète du module d'écoute composée de l'adresse de la machine et du numéro de port qu'il utilise (NLSADRR),
- le chemin d'accès au réseau,
- le chemin d'accès complet au fichier journal du module d'écoute (Listener Logfile Full Path Name, LLFPN),

Toutes ces informations sont extraites du fichier TUXCONFIG de la machine maître. Ces informations ne sont pas modifiables par cette commande, à l'exception du LLFPN. Partie du programme correspondant à l'exécution de la commande de modification du LLFPN: 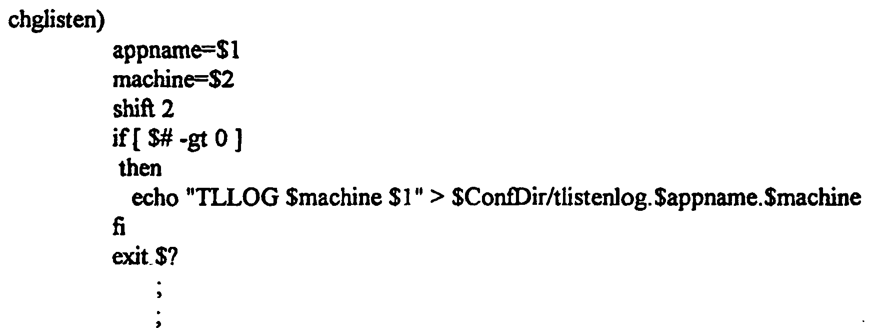 Pour pouvoir visualiser les modules d'écoute actifs de l'application, l'administrateur doit sélectionner la fonction "Show currently running Listener Processes" en cliquant sur le pavé (14) de la fenêtre de la Figure 1. L'ordinateur affiche la liste des machines de l'application sur lesquelles un module d'écoute est actif et l'identification du processus PID (Process Identifier) appartenant à la configuration du réseau. Partie de programme correspondant à l'affichage de la liste des modules d'écoute actifs, qui utilise la fonction get_tuxval.

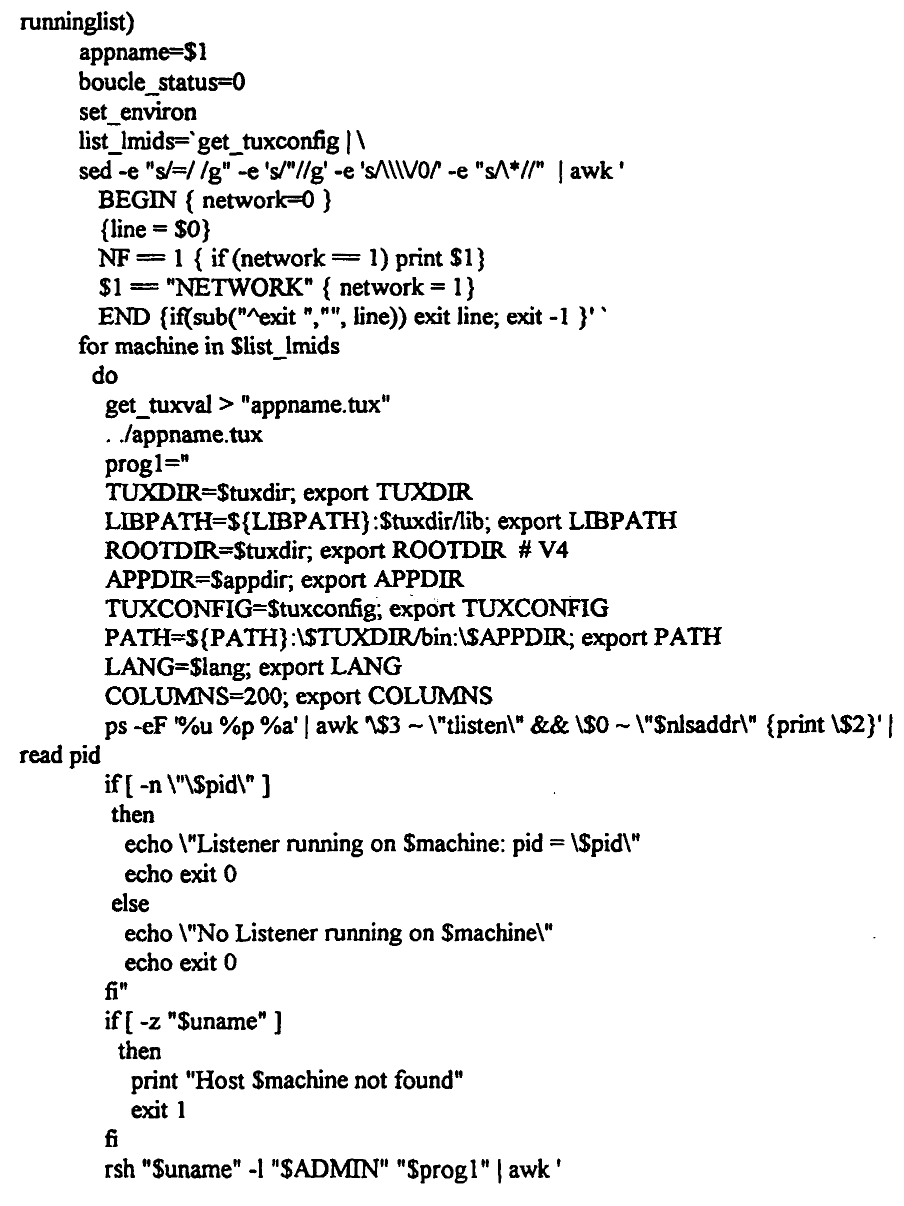

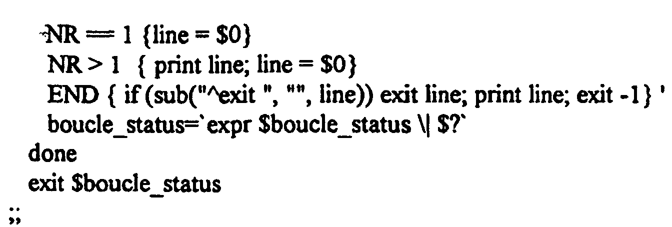

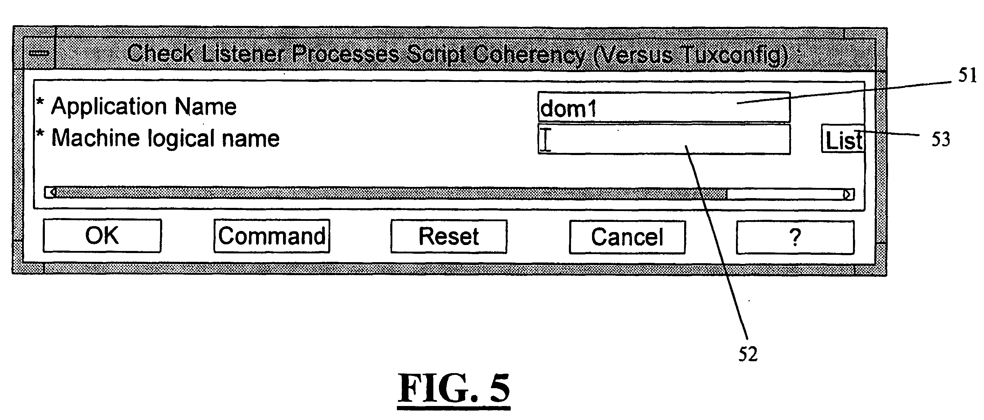

L'administrateur peut aussi vérifier le script d'un module d'écoute. En sélectionnant la fonction "Check consistency of Listener Process scripts with Tuxconfig" sur le pavé (15) de la fenêtre représentée en figure 1, la fenêtre de la figure 5 apparaît. L'administrateur doit entrer le nom d'une application sur le pavé (51 ) et le nom d'une machine donnée sur le pavé (52). Une liste des applications et des machines est à la disposition de l'administrateur grâce au bouton "List" (53). Le programme compare les informations contenues dans le fichier TUXCONFIG de la machine maître et extraites par la fonction "get_tuxval" avec les informations contenues dans le fichier "tlisten.(nom de l'application).(nom de la machine)" situé dans le répertoire APPDIR de la machine et donne le résultat de cette comparaison. Partie du programme correspondant à la vérification d'un script d'un module d'écoute qui permet de signaler les discordances entres les paramètres des fichiers en imprimant par exemple pour le pont "BRIDGE values mismatch":

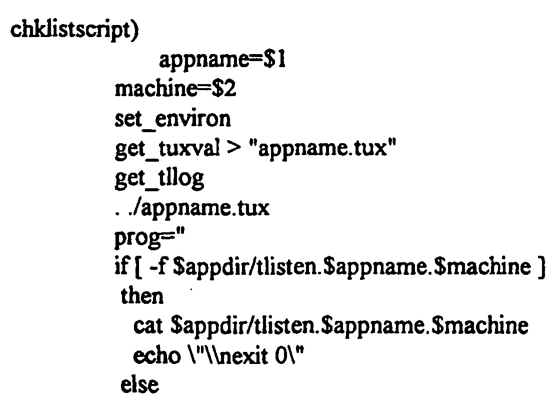

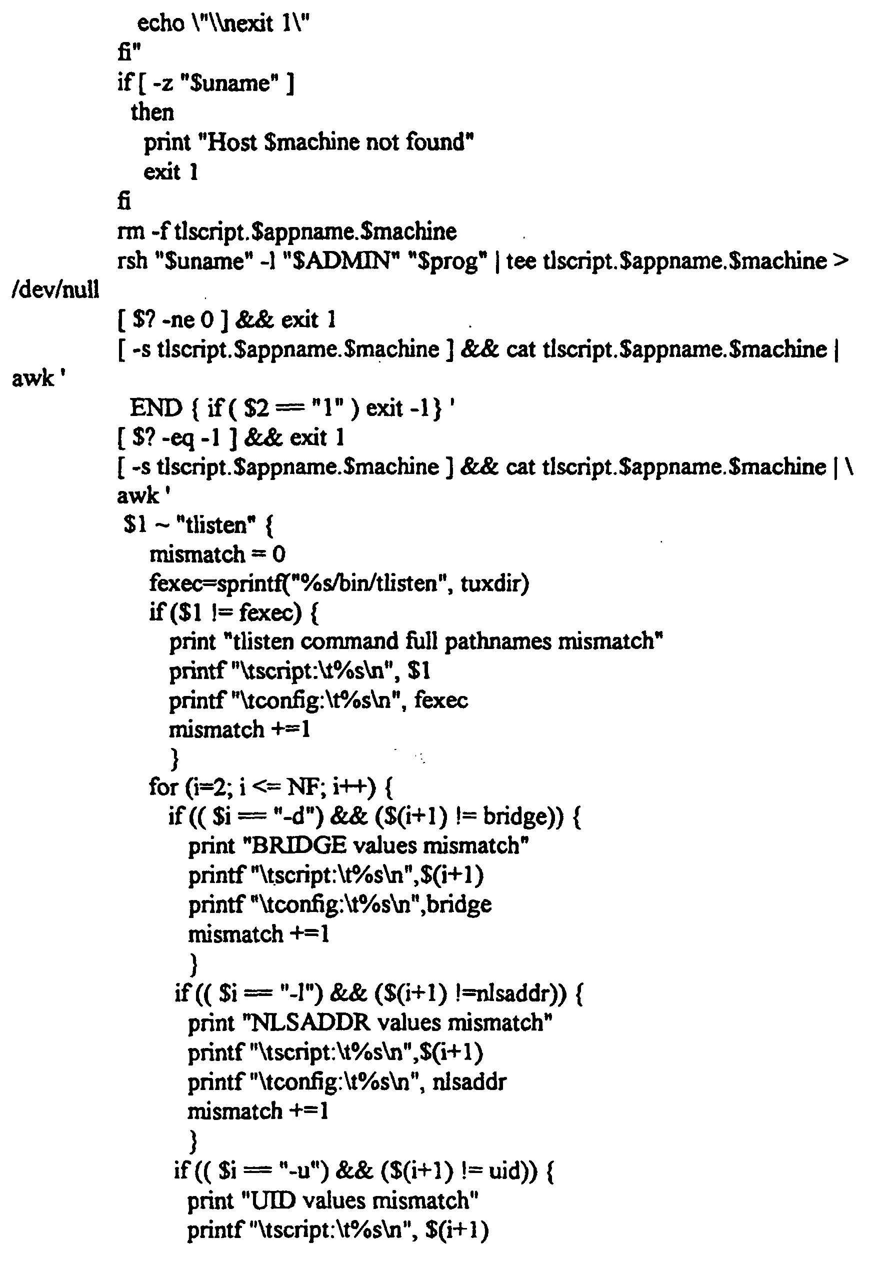

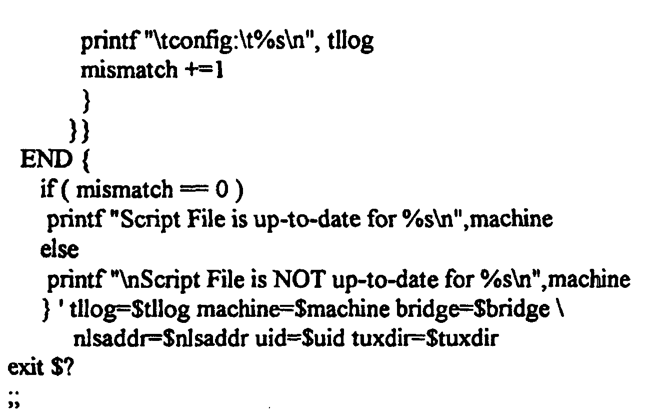

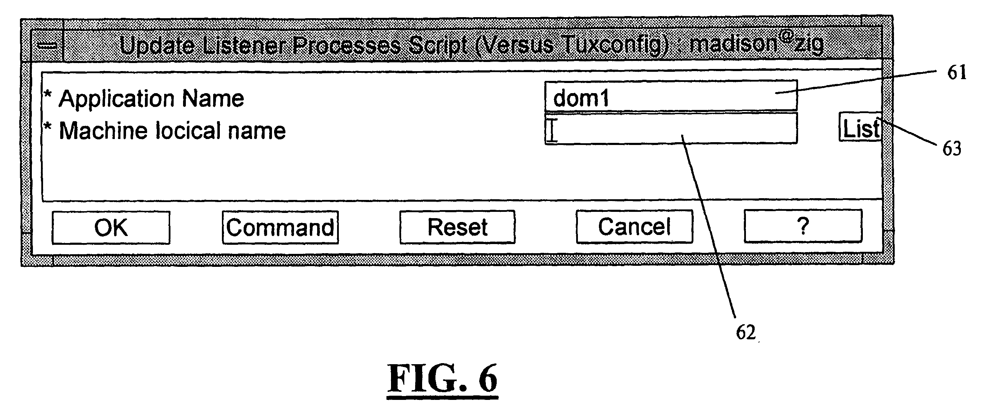

Un script d'un module d'écoute peut aussi être mis à jour par la sélection de la fonction "Update Listener Process scripts to TUXCONFIG Level". Un script d'un module d'écoute Tuxedo permet de lancer un module d'écoute. Il suffit d'intégrer un script de ce type pour une machine donnée, dans la séquence de lancement pour que le module d'écoute soit lancé automatiquement en même temps que la machine. Dans la fenêtre représenté figure 6, l'administrateur entre sur le pavé (61) le nom d'une application, et sur le pavé (62) le nom d'une ou de plusieurs machines. Le programme se procure par l'appel de la sous routine "get_tuxval", toutes les informations dont il a besoin dans le fichier binaire de configuration extraites par la sous routine "get_tuxconfig" et crée un fichier lui correspondant dans le répertoire APPDIR sous le nom "tlisten.(nom de l'application).(nom de la machine). Partie du programme correspondant à l'exécution de la commande de mise à jour d'un script d'un module d'écoute:

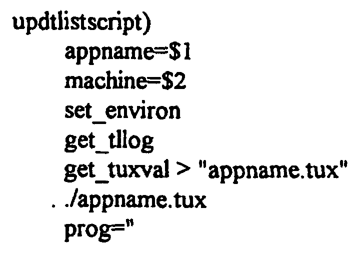

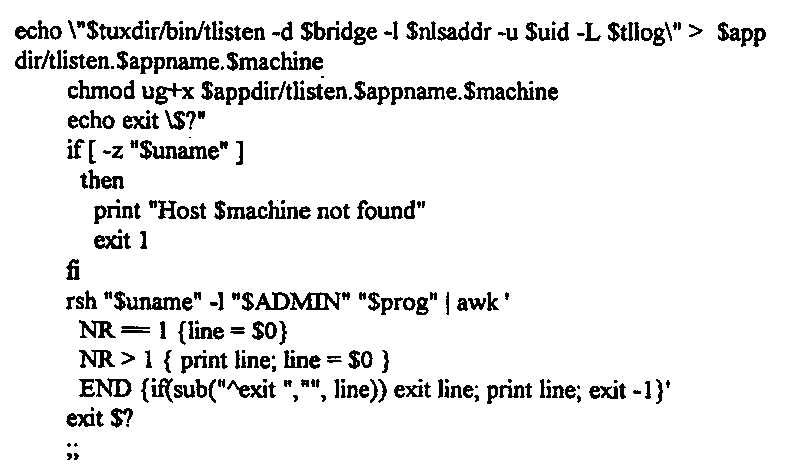

## Revendications

1. Procédé d'assistance à l'administration d'une application distribuée d'un gestionnaire de traitement des transactions, ladite application étant basée sur un fichier binaire de configuration (TUXCONFIG) et apte à être exécutée simultanément sur plusieurs machines, **caractérisé en ce que** ledit procédé comporte :
- une étape de décompilation dudit fichier de configuration actif d'une machine maître (Mm) par un module autonome de décompilation,
- une étape de récupération, par un module autonome de prélèvement automatique, d'informations relatives à ladite application directement dans le fichier de configuration décompilé de la machine maître (Mm),
- une étape de vérification de la consistance de ladite application mise en oeuvre sur une machine donnée,
- une étape de gestion d'au moins un module d'écoute (3) d'une machine quelconque de l'application à partir d'une autre machine, ledit module d'écoute (3) étant lancé sur la machine de façon assistée par utilisation des informations prélevées lors de l'étape de récupération.

2. Procédé selon la revendication 1, **caractérisé en ce que** les informations concernant ladite application distribuée sont directement prélevées dans le fichier de configuration actif de la machine maître (Mm).

3. Procédé selon la revendication 1, **caractérisé en ce que** l'étape de vérification de consistance de ladite application consiste en une comparaison entre des informations issues du fichier de configuration de la machine maître (Mm) et des informations issues de ladite application courante mise en oeuvre sur une machine donnée.

4. Procédé selon la revendication 1, **caractérisé en ce que** ladite gestion des modules d'écoute (3) consiste à lancer et à arrêter au moins un module d'écoute (3), à afficher des informations concernant au moins un module d'écoute (3), à modifier le journal d'au moins un module d'écoute (3), à vérifier le script d'au moins un module d'écoute (3) et/ou à mettre à jour le script d'au moins un module d'écoute (3).

5. Procédé selon la revendication 1, **caractérisé en ce qu'**il comprend une étape de lancement et d'arrêt d'un module d'écoute (3) mis en oeuvre sur une première machine, cette étape étant mise en oeuvre par un administrateur utilisant une deuxième machine distincte de la première, appartenant au même réseau que la première machine.

6. Procédé selon la revendication 1 **caractérisé en ce qu'**il comprend une étape d'activation simultanée de plusieurs modules d'écoute (3).

7. Procédé selon la revendication 1, **caractérisé en ce que** les étapes du procédé sont mises en oeuvre par l'intermédiaire d'une interface graphique comprenant au moins une icône, au moins un menu, et au moins une boîte de dialogue.

8. Procédé selon la revendication 7, **caractérisé en ce que** les menus de l'interface graphique sont structurés sous forme d'arborescence et l'actionnement d'un menu provoque l'affichage d'une liste de valeurs de la configuration courante, sélectionnable par l'utilisateur.

9. Procédé selon la revendication 3, **caractérisé en ce que** lorsque le fichier contenant des informations sur ladite application mise en oeuvre sur une machine donnée (tlog) est inexistant le procédé le génère automatiquement pour pouvoir l'utiliser lors du prochain lancement des modules d'écoute (3).

10. Procédé selon la revendication 5, caractérisé en ce lesdites informations affichées concernant au moins un module d'écoute (3) comprennent au moins le nom de ladite application, le nom logique de la machine (LMID)sur laquelle ladite application est exécutée, l'identification de l'utilisateur (UID) de ladite application, l'adresse utilisée par le module d'écoute (NLSADRR), le chemin d'accès au réseau de ladite application, le chemin d'accès au fichier journal dudit module d'écoute (LLFPN).

## Patentansprüche

1. Verfahren zur Unterstützung der Steuerung einer verteilten Anwendung eines Transaktionsverarbeitungsmanagers, wobei die Anwendung auf einer binären Konfigurationsdatei (TUXCONFIG) basiert und gleichzeitig auf mehreren Maschinen ausgeführt werden kann, **dadurch gekennzeichnet, dass** das Verfahren umfasst:
- einen Schritt des Dekompilierens der aktiven Konfigurationsdatei einer Master-Maschine (Mm) durch ein autonomes Dekompilierungsmodul,
- einen Schritt des Wiedergewinnens von auf die Anwendung bezogenen Informationen direkt in der dekompilierten Konfigurationsdatei der Master-Maschine (Mm) durch ein autonomes Modul zum automatischen Abtasten,
- einen Schritt der Untersuchung der Beschaffenheit der auf einer gegebenen Maschine ausgeführten Anwendung,
- einen Schritt des Steuerns wenigstens einen Abhörmoduls (3) einer beliebigen Maschine der Anwendung ausgehend von einer anderen Maschine, wobei das Abhörmodul (3) auf der Maschine unterstützt durch die Verwendung von im Wiedergewinnungsschritt abgetasteten Informationen gestartet wird.

2. Verfahren nach Anspruch 1, **dadurch gekennzeichnet, dass** die die verteilte Anwendung betreffenden Informationen direkt aus der aktiven Konfigurationsdatei der Master-Maschine (Mm) geholt werden.

3. Verfahren nach Anspruch 1, **dadurch gekennzeichnet, dass** der Schritt der Untersuchung der Beschaffenheit der Anwendung aus einem Vergleich zwischen Informationen, die von der Konfigurationsdatei der Master-Maschine (Mm) stammen, und Informationen, die von der auf einer gegebenen Maschine ausgeführten momentanen Anwendung stammen, besteht.

4. Verfahren nach Anspruch 1, **dadurch gekennzeichnet, dass** die Steuerung der Abhörmodule (3) darin besteht, wenigstens ein Abhörmodul (3) zu starten und anzuhalten, die wenigstens ein Abhörmodul (3) betreffenden Informationen anzuzeigen, den Bericht wenigstens eines Abhörmoduls (3) zu modifizieren, das Skript wenigstens eines Abhörmoduls (3) zu untersuchen und/oder das Skript wenigstens eines Abhörmoduls (3) zu aktualisieren.

5. Verfahren nach Anspruch 1, **dadurch gekennzeichnet, dass** es einen Schritt des Startens und Anhaltens eines auf einer ersten Maschine ausgeführten Abhörmoduls (3) umfasst, wobei dieser Schritt durch einen Administrator ausgerührt wird, der eine zweite Maschine verwendet, die von der ersten Maschine verschieden ist und zum selben Netz wie die erste Maschine gehört.

6. Verfahren nach Anspruch 1, **dadurch gekennzeichnet, dass** es einen Schritt des gleichzeitigen Aktivierens mehrerer Abhörmodule (3) umfasst.

7. Verfahren nach Anspruch 1, **dadurch gekennzeichnet, dass** die Verfahrensschritte über eine Graphikschnittstelle ausgeführt werden, die wenigstens ein Icon, wenigstens ein Menü und wenigstens eine Dialogbox enthält.

8. Verfahren nach Anspruch 7, **dadurch gekennzeichnet, dass** die Menüs der Graphikschnittstelle eine Baumstruktur haben und die Ausführung eines Menüs die Anzeige einer Liste von Werten der vom Anwender auswählbaren momentanen Konfiguration bewirkt.

9. Verfahren nach Anspruch 3, **dadurch gekennzeichnet, dass** es dann, wenn die Datei, die die Informationen über eine auf einer gegebenen Maschine (tlog) ausgeführte Anwendung enthält, nicht vorhanden ist, diese automatisch erzeugt, um sie beim nächsten Starten der Abhörmodule (3) verwenden zu können.

10. Verfahren nach Anspruch 5, **dadurch gekennzeichnet, dass** die angezeigten Informationen, die wenigstens ein Abhörmodul (3) betreffen, wenigstens den Namen der Anwendung, den logischen Namen der Maschine (LMID), auf der die Anwendung ausgeführt wird, die Kennung (UID) des Anwenders der Anwendung, die von dem Abhörmodul verwendete Adresse (NLSADRR), den Zugriffspfad auf das Netz der Anwendung und den Zugriffspfad (LLFPN) auf die Berichtsdatei des Abhörmoduls umfasst.

## Claims

1. Method of assistance in the administration of a distributed application of a transaction processing manager, said application being based on a binary configuration file (TUXCONFIG) and capable of being executed simultaneously on several machines, **characterised in that** said method comprises:
- a step of decompilation of said active configuration file of a master machine (Mm) by an autonomous decompilation module,
- a step of recovery, by an autonomous module for automatically gathering information relating to said application, directly from the decompiled configuration file of the master machine (Mm),
- a step of checking the consistency of said application used on a given machine,
- a step of managing at least one module for listening (3) by any machine to the application coming from another machine, said listening module (3) being launched on the machine in an assisted way by using the information gathered in the recovery step.

2. Method according to Claim 1, **characterised in that** the information relating to said distributed application is gathered directly from the active configuration file of the master machine (Mm).

3. Method according to Claim 1, **characterised in that** the step of checking the consistency of said application consists of a comparison between the information from the configuration file of the master machine (Mm) and the information from said current application used on a given machine.

4. Method according to Claim 1, **characterised in that** said management of the listening modules (3) consists in launching and stopping at least one listening module (3), in posting information relating to at least one listening module (3), in modifying the journal of at least one listening module (3), in checking the script of at least one listening module (3) and/or updating the script of at least one listening module (3).

5. Method according to Claim 1, **characterised in that** it comprises a step of launching and stopping a listening module (3) used on a first machine, this step being implemented by an administrator using a second machine distinct from the first one, belonging to the same network as the first machine.

6. Method according to Claim 1 **characterised in that** it comprises a step of simultaneous activation of several listening modules (3).

7. Method according to Claim 1, **characterised in that** the steps of the method are implemented via a graphic interface comprising at least one icon, at least one menu, and at least one dialogue box.

8. Method according to Claim 7, **characterised in that** the menus of the graphic interface are structured in the form of a tree structure and the actuation of a menu causes the posting of a list of values of the current configuration, which can be selected by the user.

9. Method according to Claim 3, **characterised in that** when the file containing information on said application used on a given machine (tlog) is non-existent the method generates it automatically in order to be able to use it when the listening modules (3) are next launched.

10. Method according to Claim 5, **characterised in that** said information posted concerning at least one listening module (3) comprise at least the name of said application, the logical name of the machine (LMID) on which said application is executed, the user identification (UID) of said application, the address used by the listening module (NLSADRR), the access path to the network of said application, the access path to the journal file of said listening module (LLFPN).
